# EUROPÄISCHE PATENTANMELDUNG

(11) **EP 4 668 563 A1**
(43) Veröffentlichungstag der Anmeldung: **24.12.2025**
(21) Anmeldenummer: 25180931.5
(22) Anmeldetag: 05.06.2025
(51) Int. Cl.: H02M 3/158

(54) **DC-DC-WANDLER**

(30) Priorität: 17.06.2024 DE 102024205591; 21.03.2025 DE 102025110978
(71) Anmelder: AUMOVIO Germany GmbH, 60488 Frankfurt am Main (DE)
(72) Erfinder: Kovatchev, Emil, 1200 Wien (AT); Friedrich, Florian, 1200 Wien (AT); Stöger, Christian, 1200 Wien (AT)
(74) Vertreter: Aumovio Corporation

(57) **Zusammenfassung**

Es wird ein DC-DC-Wandler in Form eines ZVS-Boost oder ZVS-Buck-Wandler beschrieben, bei dem einem Speichertransistor eine Resonanzspule in Serie und ein Resonanzkondensator parallelgeschaltet ist, wodurch ein M-Type-Schalter gebildet ist. Als Freilaufelement wird ein Synchrongleichrichtertransistor verwendet, der von der Resonanzspannung an einem Verbindungsanschluss zwischen der Resonanzspule und dem Resonanzkondensator angesteuert wird. Der Resonanz-Verbindungsanschluss ist hierfür über eine Spannungsteiler mit signalformenden Bauteilen mit dem Steueranschluss des Synchrongleichrichtertransistors verbunden.

## Beschreibung

DC-DC-Wandler in Form von Step-up-Spannungswandlern (auch "Boost-Konverter", "Aufwärtswandler" genannt) und Step-down-Spannungswandlern ("Buck-Konverter", "Abwärtswandler") erfordern mindestens zwei Schaltelemente, die oft in Form eines MOSFET und einer Diode oder von zwei MOSFETs ausgeführt sind, wobei der eine die Gleichrichter - oder Freilaufrolle übernimmt, und werden meistens in dem sogenannten "hartschaltenden" Modus betrieben. Dies bedeutet, dass die Schaltelemente durch die Kontrolllogik in einem Moment zum Schalten gezwungen werden, in dem der Strom und/oder die Spannung durch bzw. am Schalter ungleich Null ist. Dies verursacht Schaltverluste, die sich als die Fläche unterhalb der Strom- und Spannungskurven während des Schaltvorgangs, gemittelt über die Schaltperiode ergeben.

Durch den gezielten Einsatz von zusätzlichen Reaktanzen, in Form von Resonanzdrossel und Resonanzkondensator, lassen sich die sogenannten ZVS (zero voltage switching) und ZCS (zero current switching) - Wandlertopologien synthetisieren. Ihr Vorteil besteht in der Tatsache, dass zumindest einer der Schaltvorgänge, wahlweise das Ein- oder das Abschalten, verlustfrei erfolgen kann, da in diesem Moment entweder die Spannung am Schaltelement (ZVS) oder der Strom durch das Schaltelement (ZCS) Null ist.

Diese Resonanz-Topologien sind auch kommerziell äußerst erfolgreich, sei es in Ladegeräten, Fernsehen, Photovoltaik etc. Es handelt sich praktisch immer um Trafo-Wandler, die oft als Flyback oder LLC-Halbbrücken mit mehreren Schaltern konfiguriert sind. Diese Topologien bieten sich oft auch für den Einsatz von synchronen Gleichrichtern, z.B. MOSFETs statt Dioden an, um die Verluste weiter zu optimieren.

Insbesondere in Lichtsteuergeräten gilt das Interesse jedoch einfacheren, Trafo-losen Boost- und Buck-Topologien.

Ein Beispiel für einen ZVS-Boost-Wandler ist aus
https://www.researchgate.net/publication/224343532_Digitally_controlled_Z
VS_quasi-resonant_boost_converter_with_M-type_switch
bekannt. Durch die Zugabe von zwei Reaktanzen, der Drossel Lr und dem Kondensator Cr, werden die sogenannten M-type-Schalter, "M-switch", synthetisiert, die (bei geeigneter Zeitsteuerung) die Spannung am Boost-Schalter im (oder kurz vor dem) Moment des Einschaltens auf Null führen:
Ein weiteres Beispiel für einen solchen ZVS-Boost-Wandler wird im folgenden Buch betrachtet:
Resonant Power Converters, 2nd Edition. Marian K. Kazimierczuk, Dariusz Czarkowski. ISBN: 978-0-470-90538-8 April 2011 640 Pages, p. 489

Zu beachten ist, dass die oben genannten Wandler eine Diode als Gleichrichter verwenden. Der potentielle Einsatz eines Transistorschalters statt einer Diode zwecks Verlustleistungsoptimierung scheitert daran, dass die typischen Halbbrückentreiber-ICs, die normalerweise dafür verwendet werden, in dieser Resonanzanordnung wegen der Spannung an der Drossel Lr gar nicht funktionieren würden. Diese Halbbrückentreiber-ICs haben in der Regel eine Bootstrapschaltung für den High-Side-Gatetreiber, die eine feste Drain-Source-Verbindung der Halbbrücken-FETs benötigt, um richtig zu funktionieren und somit den oberen FET als synchronisierten Gleichrichter zu betreiben. Mit der Drossel Lr und der darauf aufgebauten Resonanzspannung können die klassischen Halbbrücken nicht funktionieren; siehe "
Hart schaltender synchroner Boost-Wandler mit Halbbrückentreiber-IC". Quelle:
https://epc-co.com/epc/Portals/0/epc/documents/application-notes/How2Ap pNote023%20How%20to%20Design%20a%2012%20V-to-60%20V%20Bo ost%20Converter.pdf?ver=VEk5bu4gx2INMsA3rbIDig%3d%3d

In der WO 2019/192234 A1 wird der potentielle Einsatz eines synchronen Gleichrichters (S3) angedeutet, jedoch ohne konkrete Erklärung, wie das erfolgen soll.

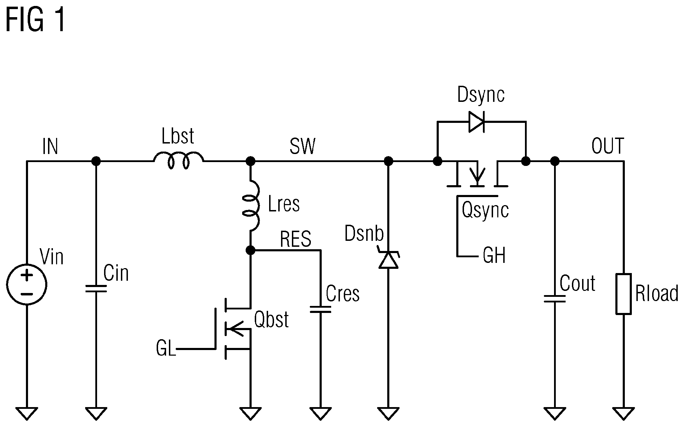

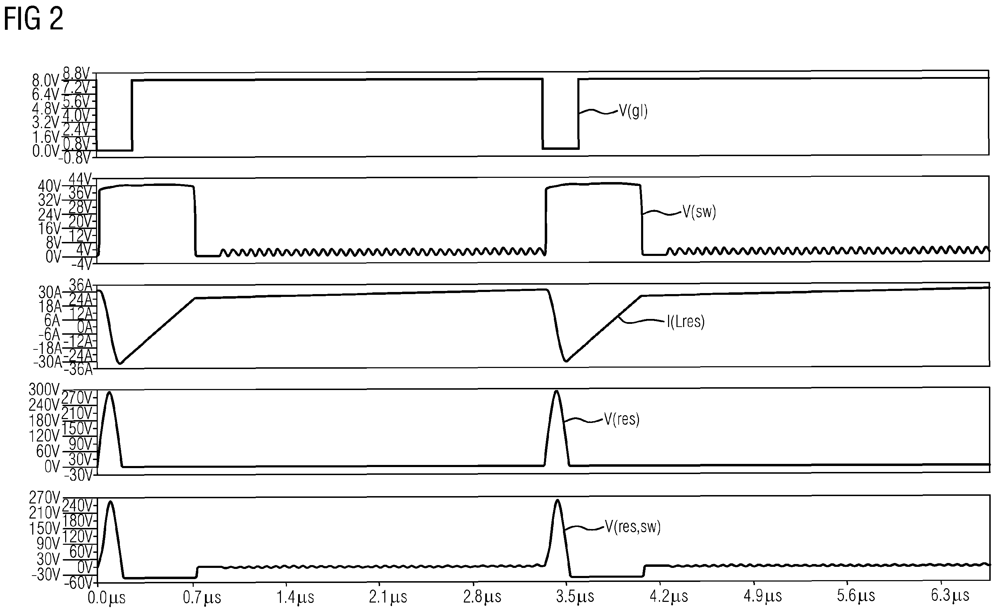

Die o.g. ZVS-Boost-Topologien mit M-switch lassen sich in generalisierter Form, wie in der Fig. 1 gezeigt, darstellen, mit Dsync oder Qsync als Gleichrichter in der Allgemeindarstellung. Ein Simulationsergebnis dieser Schaltung mit Diode Dsync (und der Bodydiode des Gleichrichter-FET Qsync, GH ist inaktiv) ist in der Fig. 2 dargestellt und zeigt die charakteristischen Strom-/Spannungskurven; in der Auszeit (V(gl) auf low) schwingt die Spannung V(res) am Drainanschluss des Schalters Qbst in sinusoidaler Form und kommt auf Null kurz bevor dem Wiedereinschalten des Schalters Qbst.

Analog kann auch ein ZVS-Buck-Wandler mit resonantem M-switch für die Umsetzung dieser Idee in Erwägung gezogen werden. Dabei ergeben sich zwei Möglichkeiten, die Resonanzdrossel Lres links oder rechts vom M-switch zu platzieren. Im folgenden sollen sie als Variante 1 oder Variante 2 bezeichnet werden.

Zuerst soll der ZVS-Buck-Wandler Variante 1 mit Lres links vom Schalter betrachtet werden, wie er beispielsweise aus
https://e-university.tu-sofia.bg/e-publ/files/1493_Paper_Hinov_Rangelov.pdf bekannt ist.

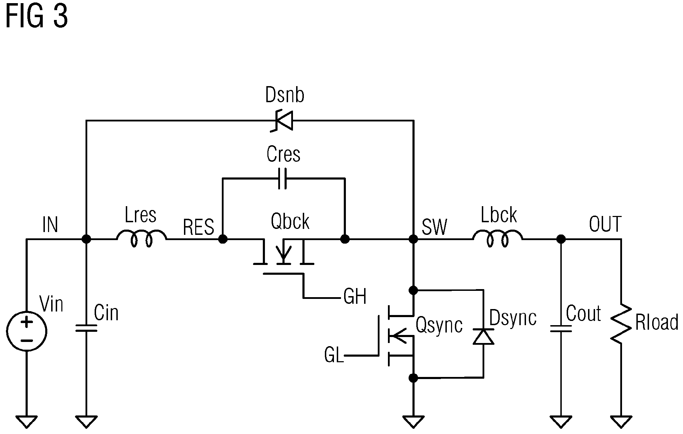

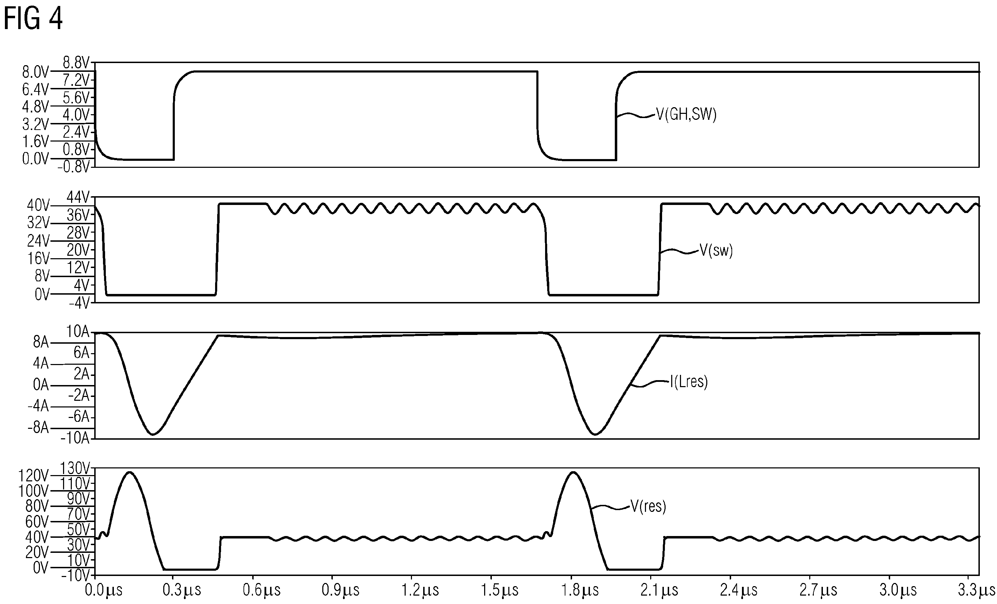

Analog zu dem oben beschriebenen ZVS-Boost-Wandler lässt sich der generalisierte ZVS-Buck-Wandler Variante 1 mit positiver Resonanzspannung V(res) wie in der Fig. 3 gezeigt, darstellen. Die Simulation dieser Schaltung {GL ist inaktiv in der Simulation, die Gleichrichtung erfolgt durch die Diode Dsync bzw. durch die Bodydiode von Qsync) zeigt, wie in Fig. 4 dargestellt, dass die Resonanzspannung V(res) am RES-Knoten wie erwartet einen hohen positiven Spitzenwert aufweist. Allerdings hat V(res) einen positiven Gleichspannungsanteil, gleich der Eingangsspannung V(in), und dies bedingt eine Qsync-Steuerschaltung, die sich von der des ZVS-Boost-Wandlers unterscheidet. V(res) ist mit der untersten Kurve der Fig. 4 dargestellt.

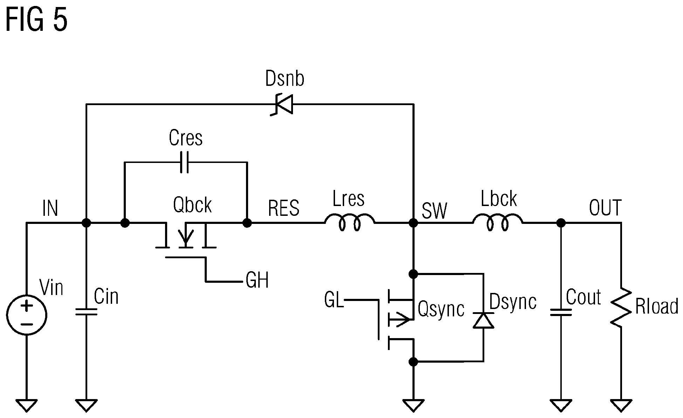

Nun erfolgt die Betrachtung des ZVS-Buck-Wandlers Variante 2 mit Lres rechts vom Schalter, wie in Fig. 5 dargestellt und wie er beispielsweise aus
https://e-university.tu-sofia.bg/e-publ/files/1493_Paper_Hinov_Rangelov.pdf bekannt ist.

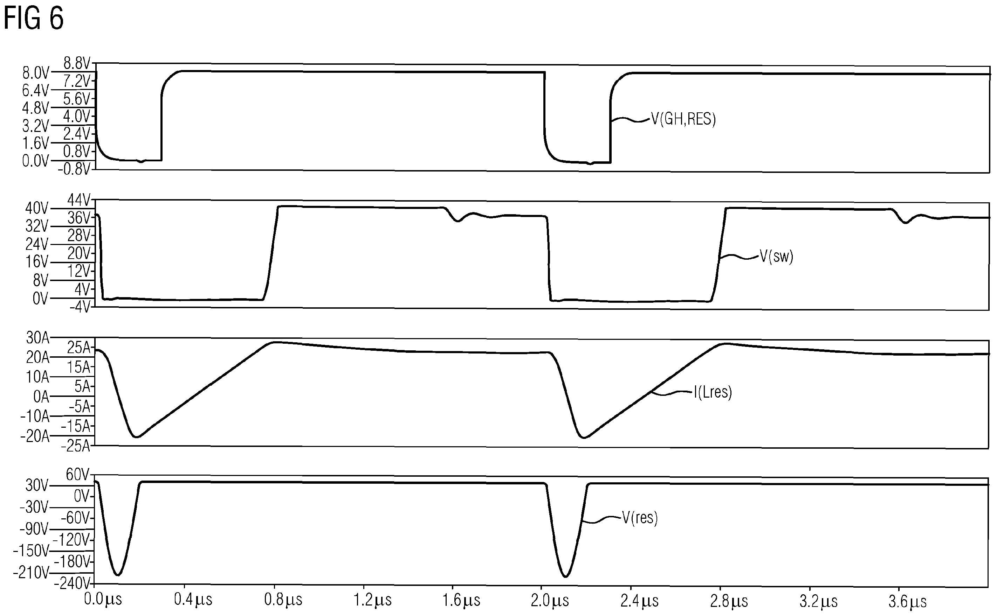

Die Simulation dieser Schaltung (GL ist inaktiv in der Simulation, die Gleichrichtung erfolgt durch die Diode Dsync bzw. durch die Bodydiode von Qsync) zeigt, dass die Resonanzspannung V(res) am RES-Knoten wie erwartet einen hohen negativen Spitzenwert aufweist. V(res) ist mit der untersten Kurve der Fig. 6 dargestellt.

Es ist die Aufgabe der Erfindung, DC-DC-Wandler anzugeben, die ausgehend vom genannten Stand der Technik einen ZVS-Betrieb ermöglichen und dabei möglichst einfach aufgebaut sind.

Die Aufgabe wird gelöst durch einen DC-DC-Wandler mit einem Eingangsanschluss und einem Ausgangsanschluss, wobei zwischen dem Eingangsanschluss und dem Ausgangsanschluss eine Speicherspule und ein dazu über einen ersten Verbindungsanschluss in Serie geschalteter Synchrongleichrichtertransistor verschaltet sind, wobei zwischen dem ersten Verbindungsanschluss und einem Bezugspotential eine Resonanzspule und ein dazu über einen zweiten Verbindungsanschluss in Serie geschalteter Speichertransistor verschaltet sind, wobei dem Speichertransistor ein Resonanzkondensator parallelgeschaltet ist, und wobei zwischen dem ersten Verbindungsanschluss und dem Bezugspotential eine in Sperrrichtung gepolte erste Diode verschaltet ist. Zwischen dem zweiten Verbindungsanschluss und einem Steueranschluss des Synchrongleichrichtertransistors ist die Serienschaltung aus einem ersten Spannungsteilerwiderstand und einem ersten Kondensator verschaltet und zwischen dem Steueranschluss des Synchrongleichrichtertransistors und dem ersten Verbindungsanschluss ist ein zweiter Spannungsteilerwiderstand verschaltet.

Die Resonanzspannung am zweiten Verbindungsanschluss, dem Resonanzknoten, ist die höchste Spannung im Wandler-System. Es wird daher statt einer Gleichrichterdiode ein N-MOSFET als Synchrongleichrichter verwendet, dessen Sourceanschluss mit dem ersten Verbindungsknoten SW verbunden ist und durch eine geeignete Schaltung aus Widerständen und einem Kondensator aus der hohen Resonanzspannung wird eine passende Gate-Steuerspannung aufbereitet, die den Gleichrichter-FET in den Phasen, in denen der Speichertransistor aus ist, als synchronen Gleichrichter ansteuern kann.

Die Aufgabe wird auch gelöst durch einen DC-DC-Wandler mit einem Eingangsanschluss und einem Ausgangsanschluss, wobei zwischen dem Eingangsanschluss und einem ersten Verbindungsanschluss eine Resonanzspule und ein dazu über einen zweiten Verbindungsanschluss in Serie geschalteter Speichertransistor verschaltet sind, wobei dem Speichertransistor ein Resonanzkondensator parallelgeschaltet ist, wobei zwischen dem ersten Verbindungsanschluss und dem Ausgangsanschluss eine Speicherspule verschaltet ist, wobei zwischen dem ersten Verbindungsanschluss und einem Bezugspotential ein Synchrongleichrichtertransistor verschaltet ist, und wobei zwischen dem Eingangsanschluss und dem ersten Verbindungsanschluss eine in Sperrrichtung gepolte erste Diode verschaltet ist. Zwischen dem zweiten Verbindungsanschluss und einem Steueranschluss des Synchrongleichrichtertransistors ist die Serienschaltung aus der Laststrecke eines ersten pnp-Bipolartransistors, einem ersten Spannungsteilerwiderstand und einem ersten Kondensator verschaltet und zwischen dem Steueranschluss des Synchrongleichrichtertransistors und dem Bezugspotential ist ein zweiter Spannungsteilerwiderstand verschaltet. Parallel zu der Resonanzspule ist die Serienschaltung aus einem dritten Spannungsteilerwiderstand und einem vierten Spannungsteilerwiderstand geschaltet, deren Verbindungspunkt mit dem Basisanschluss des ersten pnp-Bipolartransistors verbunden ist.

Eine weiter Lösung der Aufgabe wird mit einem DC-DC-Wandler mit einem Eingangsanschluss und einem Ausgangsanschluss bereitgestellt, bei dem zwischen dem Eingangsanschluss und einem ersten Verbindungsanschluss ein Speichertransistor und eine dazu über einen zweiten Verbindungsanschluss in Serie geschaltete Resonanzspule verschaltet sind, wobei dem Speichertransistor ein Resonanzkondensator parallelgeschaltet ist, wobei zwischen dem ersten Verbindungsanschluss und dem Ausgangsanschluss eine Speicherspule verschaltet ist, wobei zwischen dem ersten Verbindungsanschluss und einem Bezugspotential ein Synchrongleichrichtertransistor verschaltet ist, und wobei zwischen dem Eingangsanschluss und dem ersten Verbindungsanschluss eine in Sperrrichtung gepolte erste Diode verschaltet ist. Zwischen dem zweiten Verbindungsanschluss und einem Steueranschluss des Synchrongleichrichtertransistors ist die Serienschaltung aus einem ersten Spannungsteilerwiderstand und einem ersten Kondensator verschaltet und zwischen dem Steueranschluss des Synchrongleichrichtertransistors und dem ersten Verbindungsanschluss ist ein zweiter Spannungsteilerwiderstand verschaltet.

In einer Weiterbildung des Boost-DC-DC-Wandlers oder des Buck-DC-DC-Wandeler Variante 2 ist dem zweiten Spannungsteilerwiderstand eine Zenerdiode parallelgeschaltet ist, wobei deren Kathode mit dem Steueranschluss des Synchrongleichrichtertransistors verbunden ist.

Entsprechend dazu kann dem Buck-DC-DC-Wandler Variante 1 dem zweiten Spannungsteilerwiderstand eine Zenerdiode parallelgeschaltet sein, wobei deren Anode mit dem Steueranschluss des Synchrongleichrichtertransistors verbunden ist.

Bei dem Boost-DC-DC-Wandler kann der erste Spannungsteilerwiderstand mit einem ersten Widerstand und einem zweiten Widerstand gebildet sein, zwischen denen der erste Kondensator angeordnet ist, wobei zwischen dem Steueranschluss des Synchrongleichrichtertransistors und dem ersten Verbindungsanschluss die Laststrecke eines pnp-Bipolartransistors verschaltet ist, wobei der zweite Widerstand zwischen dem Emitteranschluss und dem Basisanschluss des pnp-Bipolartransistors angeordnet ist.

Bei dem Buck-DC-DC-Wandler Variante DC-DC-Wandler Variante 1 kann der erste Spannungsteilerwiderstand mit einem ersten Widerstand und einem zweiten Widerstand gebildet sein, zwischen denen der erste Kondensator angeordnet ist, wobei zwischen dem Steueranschluss des Synchrongleichrichtertransistors und dem Bezugspotential die Laststrecke eines pnp-Bipolartransistors verschaltet ist, wobei der zweite Widerstand zwischen dem Emitteranschluss und dem Basisanschluss des pnp-Bipolartransistors angeordnet ist.

Bei dem Buck-DC-DC-Wandler Variante 2 kann der erste Spannungsteilerwiderstand mit einem ersten Widerstand und einem zweiten Widerstand gebildet sein, zwischen denen der erste Kondensator angeordnet ist, wobei zwischen dem Steueranschluss des Synchrongleichrichtertransistors und dem ersten Verbindungsanschluss die Laststrecke eines npn-Bipolartransistors verschaltet ist, wobei der zweite Widerstand zwischen dem Emitteranschluss und dem Basisanschluss des npn-Bipolartransistors angeordnet ist.

Vorteile der erfindungsgemäßen drei DC-DC-Wandler Varianten und ihrer Weiterbildungen ergeben sich aus der nachfolgenden Beschreibung von Ausführungsbeispielen, die mit Hilfe von Figuren erörtert werden. Allen drei DC-DC-Wandler-Varianten ist gemeinsam, dass einem Speichertransistor, also einem Transistor, der den Strom durch die Speicherspule steuert, eine Resonanzspule in Serie und ein Resonanzkondensator parallel geschaltet ist. Es wird ein FET als Synchrongleichrichtertransistor verwendet, dessen Gateanschluss über eine geeignete Schaltung mit einem Resonanzknoten zwischen dem Resonanzkondensator und der Resonanzspule verbunden ist, um zu einem gewünschten Zeitpunkt von der dort anliegenden hohen Spannung eingeschaltet werden zu können.

Die Figuren zeigen
- Fig. 1: einen Boost-DC-DC-Wandler nach dem Stand der Technik,
- Fig. 2: Spannungs- und Stromverläufe gemäß einer Simulation des Wandlers nach Fig. 1,
- Fig. 3: einen Buck-DC-DC-Wandler nach dem Stand der Technik,
- Fig. 4: Spannungs- und Stromverläufe gemäß einer Simulation des Wandlers nach Fig. 3,
- Fig. 5: einen weiteren Buck-DC-DC-Wandler nach dem Stand der Technik,
- Fig. 6: Spannungs- und Stromverläufe gemäß einer Simulation des Wandlers nach Fig. 5,
- Fig. 7: einen erfindungsgemäßen Boost-DC-DC-Wandler,
- Fig. 8: Spannungs- und Stromverläufe gemäß einer Simulation des Wandlers nach Fig. 7,
- Fig. 9: Spannungs- und Stromverläufe gemäß einer Simulation des Wandlers nach Fig. 7,
- Fig. 10: Spannungs- und Stromverläufe gemäß einer Simulation des Wandlers nach Fig. 7
- Fig. 11: Spannungs- und Stromverläufe gemäß einer Simulation des Wandlers nach Fig. 7,
- Fig. 12: einen erfindungsgemäßen Buck-DC-DC-Wandler,
- Fig. 13: Spannungs- und Stromverläufe gemäß einer Simulation des Wandlers nach Fig. 12,
- Fig. 14: Spannungs- und Stromverläufe gemäß einer Simulation des Wandlers nach Fig. 12,
- Fig. 15: Spannungs- und Stromverläufe gemäß einer Simulation des Wandlers nach Fig. 12,
- Fig. 16: Spannungs- und Stromverläufe gemäß einer Simulation des Wandlers nach Fig. 12,
- Fig. 17: einen weiteren erfindungsgemäßen Buck-DC-DC-Wandler,
- Fig. 18: Spannungs- und Stromverläufe gemäß einer Simulation des Wandlers nach Fig. 17,
- Fig. 19: Spannungs- und Stromverläufe gemäß einer Simulation des Wandlers nach Fig. 17.

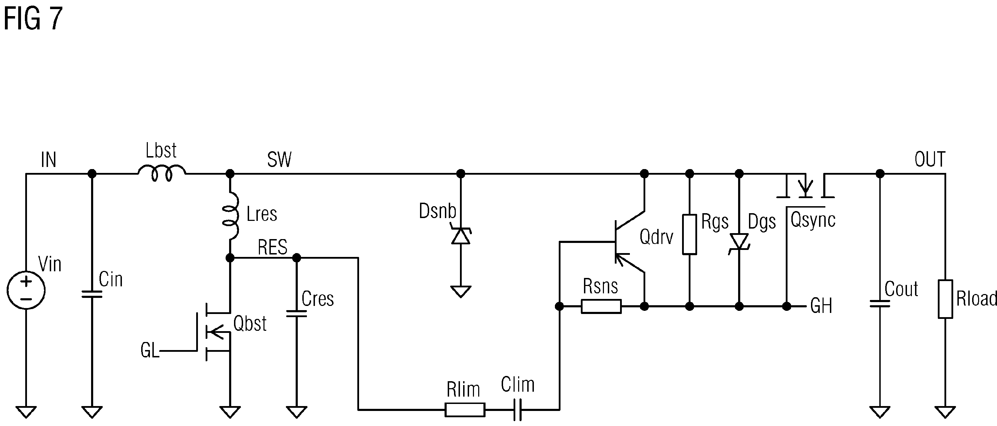

Der in der Fig. 7 dargestellte ZVS-Boost-Wandler geht aus dem in der Fig. 1 dargestellten Boost-Wandler hervor, weist aber folgende zusätzliche Komponenten auf, die in Serie geschaltet sind: erste Diode Dlim, erster Spannungsteilerwiderstand Rlim, Rsns, der mit einem ersten Widerstand Rlim und einem zweiten Widerstand Rsns gebildet ist, zwischen denen ein erster Kondensator Clim angeordnet ist. Zwischen dem Gateanschluss eines Synchrongleichrichtertransistors Qsync und dem ersten Verbindungsanschluss SW sind ein zweiter Spannungsteilerwiderstand Rgs, eine Zenerdiode Dgs und die Laststrecke eines pnp-Bipolartransistors Qdrv angeordnet, wobei der zweite Widerstand Rsns zwischen dem Emitteranschluss und dem Basisanschluss des pnp-Bipolartransistors Qdrv angeordnet ist. Der Transistor Qdrv kann optional vorgesehen werden und ermöglicht ein schnelleres Abschalten des Synchrongleichrichtertransistors Qsync.

Der Synchrongleichrichtertransistor Qsync ist ein N-MOSFET, der als synchroner Gleichrichter verwendet wird. Sein Sourceanschluss liegt am springenden ersten Verbindungsanschluss SW, somit braucht er zur Ansteuerung eine Gate-Spannung, die höher ist als die Spannung am ersten Verbindungsanschluss SW. Diese wird von der Resonanzspannung V(res) am zweiten Verbindungsanschluss RES abgeleitet. Der erste Widerstand Rlim, zusammen mit der Impedanz des ersten Kondensators Clim, dem zweiten Widerstand Rsns und dem zweiter Spannungsteilerwiderstand Rgs bestimmen das Spannungsteilungsverhältnis der Spannung V(res) am zweiten Verbindungsanschluss RES zur Spannung V(gh) am Gateanschluss des Synchrongleichrichtertransistor Qsync und somit die Gate-Source-Spannungsamplitude für den Synchrongleichrichtertransistor Qsync.

Die Kapazität des ersten Kondensators Clim wird so gewählt, dass die gesamte Gatesteuer-Schaltung bei der bekannten Resonanzfrequenz möglichst verlustarm arbeitet, unter Berücksichtigung der Gate-Ladung des verwendeten FETs, der Resonanzfrequenz, der gewünschten Gatespannung-Amplitude etc. Der pnp-Bipolartransistor Qdrv, zusammen mit dem zweiten Widerstand Rsns, ermöglicht das schnelle Sperren des Synchrongleichrichtertransistor Qsync, falls dies gewünscht ist. Die Zenerdiode Dgs schützt die Gate-Source-Strecke des Synchrongleichrichtertransistor Qsync.

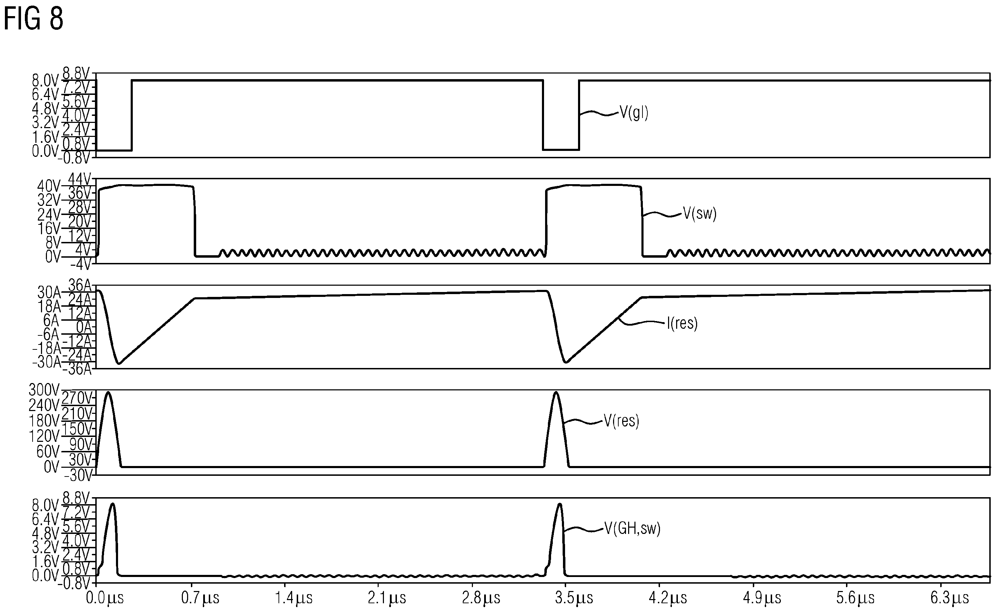

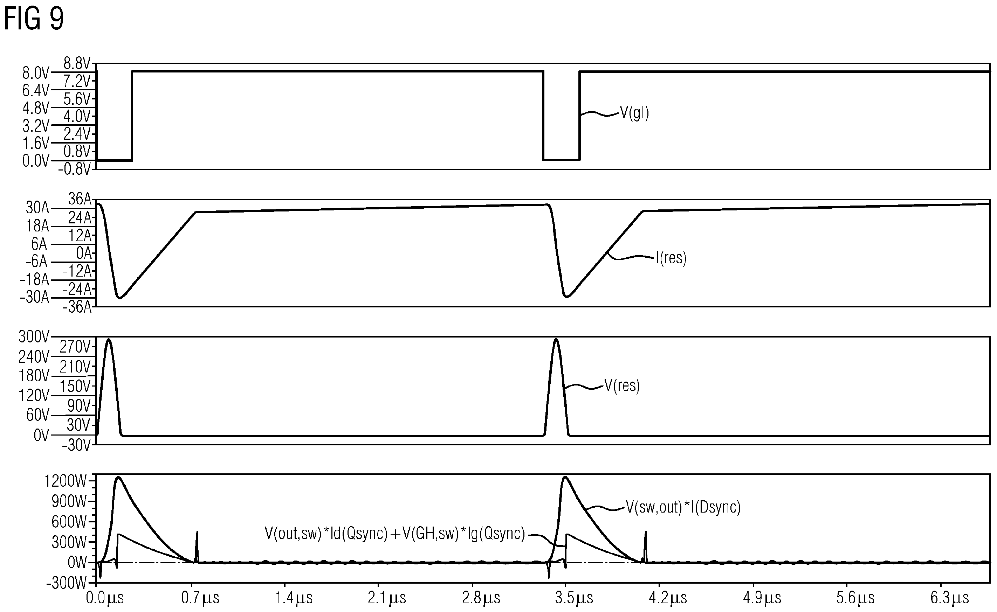

Eine Simulation des in der Fig. 7 dargestellten ZVS-Boost-Wandlers mit hoher Ausgangsleistung in Resonanzbetrieb zeigt die charakteristischen Strom-/Spannungsverläufe, wie sie in den Fig. 8 bis 11 abgebildet sind. Die Gate-Source-Spannung des Synchrongleichrichtertransistor Qsync ist in der Fig.9 im unteren Verlauf dargestellt. Wie zu sehen ist, ist die Amplitude, das Timing und die Form des Steuersignals durch die passende Auswahl der vorgeschlagenen Treiberkomponenten gut geeignet zum Ansteuern sowohl von Logik-Pegeln, als auch von Standard-N-MOSFETs in der Rolle des Synchrongleichrichtertransistors Qsync.

Diese Gatespannung unterscheidet sich von klassischen, rechteckigen FET-Steuersignal, da sie aus einer sinusförmigen Resonanzspannung mit wenigen Komponenten kostensparend abgeleitet wird. Der Synchrongleichrichtertransistor Qsync wird zeitweise im linearen Betrieb mit höherer Verlustleistung arbeiten. Trotzdem hat die Lösung mit einem solchen Synchron-FET bei geeigneter Auslegung wesentlich niedrigere Verluste als die mit einer Diode, wie auch eine Vergleichssimulation in der Fig. 9 zeigt.

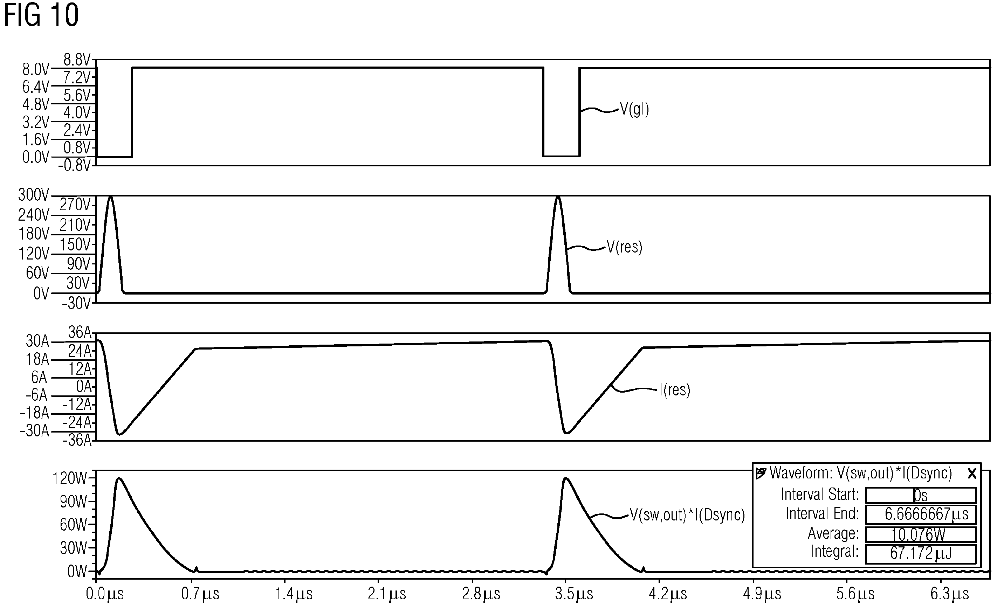

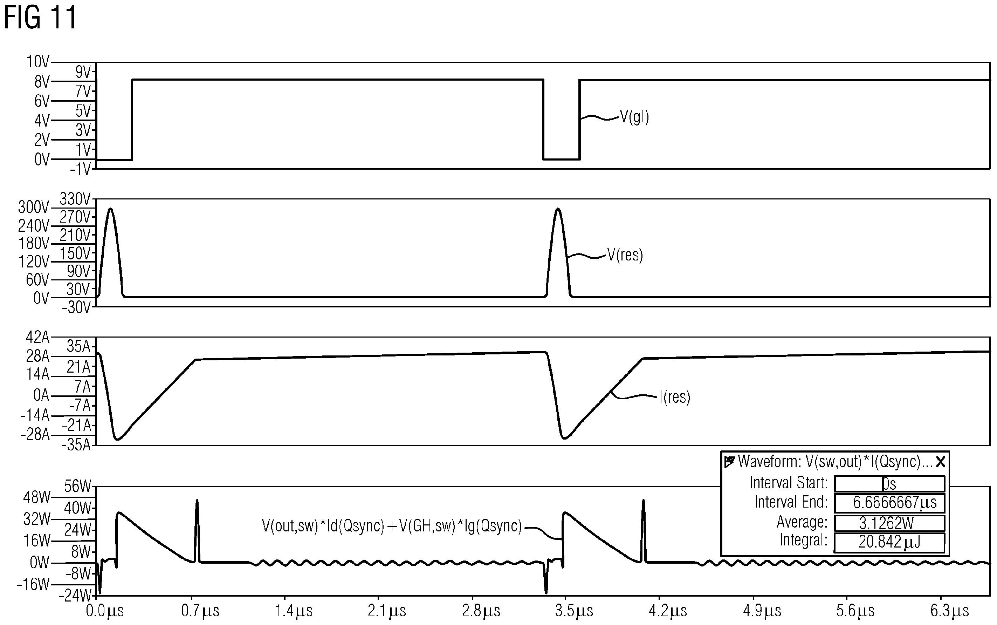

In den Figuren 10 und 11 wird eine Vergleichs-Simulation dargestellt. In einem Fall wird eine geeignete Schottky-Diode Dsync als Gleichrichter verwendet (Verlustleistung in Dsync Fig. 10 unten), im anderen Fall wird ein geeigneter N-FET mit der vorgeschlagenen Treiberschaltung als synchroner Gleichrichter verwendet (Verlustleistung in Qsync in Fig. 11 unten). Es ist sofort ersichtlich, dass die Verluste im FET, angesteuert mithilfe der vorgeschlagenen Schaltung, wesentlich niedriger sind als jene der Gleichrichterdiode (Fläche unter der Verlustleistungskurve, gemittelt über eine Schaltperiode):
Eine numerische Bewertung der Verlustleistungen in der oben beschriebenen Vergleichssimulation liefert die Verlustleistungswerte wie folgt: Verluste in Dsync (Schottky-Diode) -10.1W, Verluste in Qsync (niederohmiger N-FET) -3.1W:

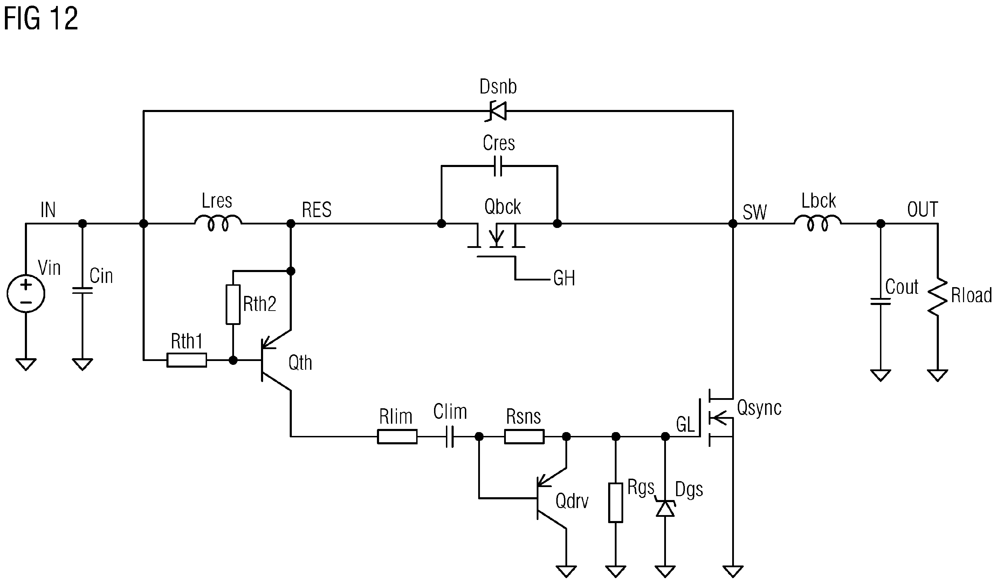

Fig. 12 zeigt eine erste Variante 1 eines ZVS-Buck-Wandlers mit synchronem Gleichrichter-FET und dessen Ansteuerung mittels der Spannung am zweiten Verbindungsanschluss RES über eine erfindungsgemäße Schaltung.

Der gezeigte ZVS-Buck-Wandler (Variante 1) geht aus dem in der Fig. 3 dargestellten Buck-Wandler hervor, weist aber zusätzliche Komponenten auf, die den einfachen ZVS-Betrieb ermöglichen: Rth1, Rrth2, Qth, Rlim, Clim, Rsns, Qdrv, Rgs, Dgs und Qsync auf.

Zwischen einem Eingangsanschluss IN und einem ersten Verbindungsanschluss SW des DC-DC-Wandlers sind eine Resonanzspule Lres und ein dazu über einen zweiten Verbindungsanschluss RES in Serie geschalteter Speichertransistor Qbck verschaltet, wobei dem Speichertransistor Qbck ein Resonanzkondensator Cres parallelgeschaltet ist. Zwischen dem ersten Verbindungsanschluss SW und dem Ausgangsanschluss OUT ist eine Speicherspule Lbck und zwischen dem ersten Verbindungsanschluss SW und einem Bezugspotential ist ein Synchrongleichrichtertransistor Qsync angeordnet. Zwischen dem Eingangsanschluss IN und dem ersten Verbindungsanschluss SW ist eine in Sperrrichtung gepolte erste Diode Dsnb verschaltet. Ähnlich wie bei dem oben beschriebenen Boost-DC-DC-Wandler ist zwischen dem zweiten Verbindungsanschluss RES und einem Steueranschluss des Synchrongleichrichtertransistors Qsync die Serienschaltung aus der Laststrecke eines ersten pnp-Bipolartransistors Qth, einem ersten Spannungsteilerwiderstand Rlim, Rsns und einem ersten Kondensator Clim verschaltet und zwischen dem Steueranschluss des Synchrongleichrichtertransistors Qsync und dem Bezugspotential ist ein zweiter Spannungsteilerwiderstand Rgs verschaltet. Parallel zu der Resonanzspule Lres ist die Serienschaltung aus einem dritten Spannungsteilerwiderstand Rth1 und einem vierten Spannungsteilerwiderstand Rth2 geschaltet, deren Verbindungspunkt mit dem Basisanschluss des ersten pnp-Bipolartransistors Qth verbunden ist.

Dem zweiten Spannungsteilerwiderstand Rgs ist eine Zenerdiode Dgs parallelgeschaltet, wobei deren Kathode mit dem Steueranschluss des Synchrongleichrichtertransistors Qsync verbunden ist. Der erste Spannungsteilerwiderstand Rlim, Rsns ist mit einem ersten Widerstand Rlim und einem zweiten Widerstand Rsns gebildet, zwischen denen der erste Kondensator Clim angeordnet ist, wobei zwischen dem Steueranschluss des und dem Bezugspotential die Laststrecke eines pnp-Bipolartransistors Qdrv verschaltet ist, wobei der zweite Widerstand Rsns zwischen dem Emitteranschluss und dem Basisanschluss des pnp-Bipolartransistors Qdrv angeordnet ist. Der Transistor Qdrv ermöglicht ein schnelleres Abschalten des Synchrongleichrichtertransistors Qsync und kann auch nur optional vorgesehen werden.

Die dargestellten und beschriebenen Bauteile haben dabei die gleiche, bereits oben zum Boost-Wandler beschriebene Funktion, was daher nicht wiederholt werden soll. Wesentlich ist, dass die hohe Spannung am zweiten Verbindungsanschluss RES genutzt wird, um den Synchrongleichrichtertransistor Qsync synchron zu schalten, um einen ZVS-Betrieb zu ermöglichen.

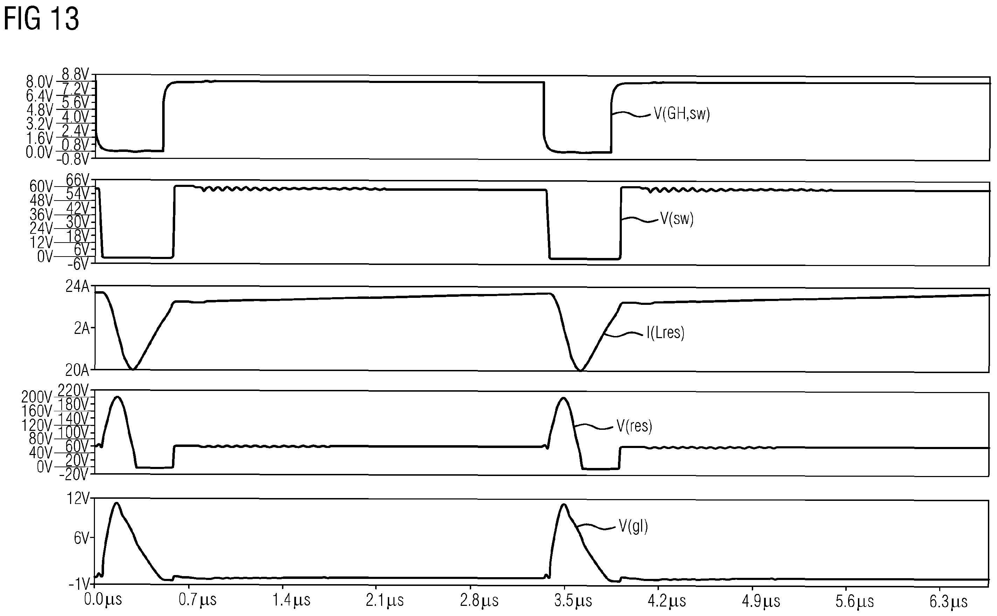

Eine Simulation des vorgeschlagenen ZVS-Buck-Wandlers (Variante 1) mit hoher Ausgangsleistung im Resonanzbetrieb zeigt die charakteristischen Strom-/Spannungsverläufe der Fig. 13. Die Gate-Source-Spannung des Synchrongleichrichtertransistors Qsync ist in der unteren Kurve dargestellt. Wie zu sehen ist, ist die Amplitude, das Timing und die Form des Steuersignals durch die passende Auswahl der vorgeschlagenen Treiberkomponenten gut geeignet zum Ansteuern sowohl von Logik-Pegeln als auch von Standard-N-MOSFETs in der Rolle des Synchrongleichrichtertransistors Qsync.

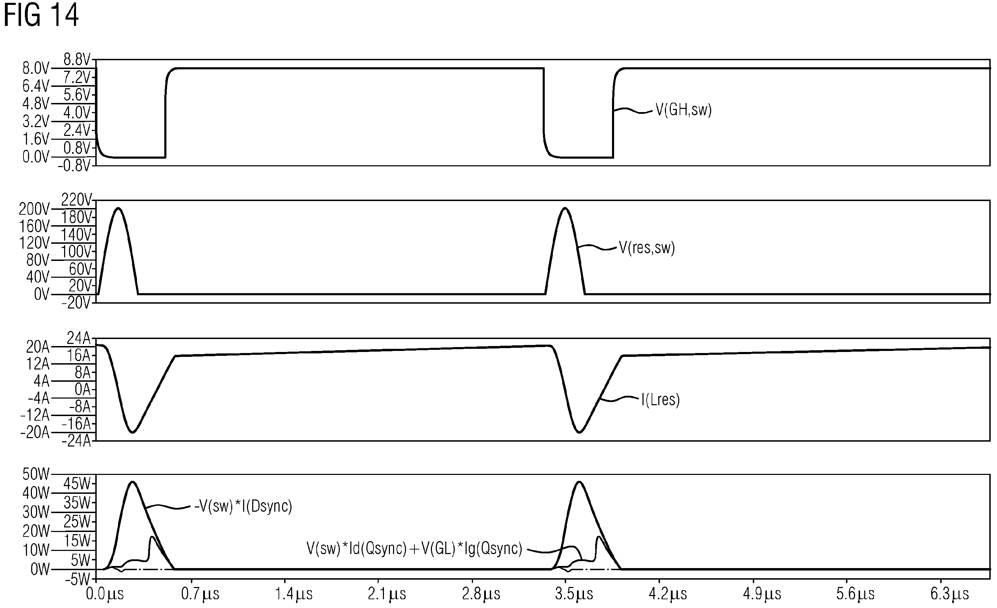

In der Fig. 14 ist wieder eine Vergleichs-Simulation dargestellt. In einem Fall wird eine geeignete Schottky-Diode Dsync als Gleichrichter verwendet (Verlustleistung in Dsync), im anderen Fall wird ein geeigneter N-Kanal-FET mit der vorgeschlagenen Treiberschaltung als synchroner Gleichrichter verwendet (Verlustleistung in Qsync). Es ist sofort ersichtlich, dass die Verluste im FET, angesteuert mithilfe der vorgeschlagenen Schaltung, wesentlich niedriger sind als jene der Gleichrichterdiode (Fläche unter der Verlustleistungskurve, gemittelt über eine Schaltperiode).

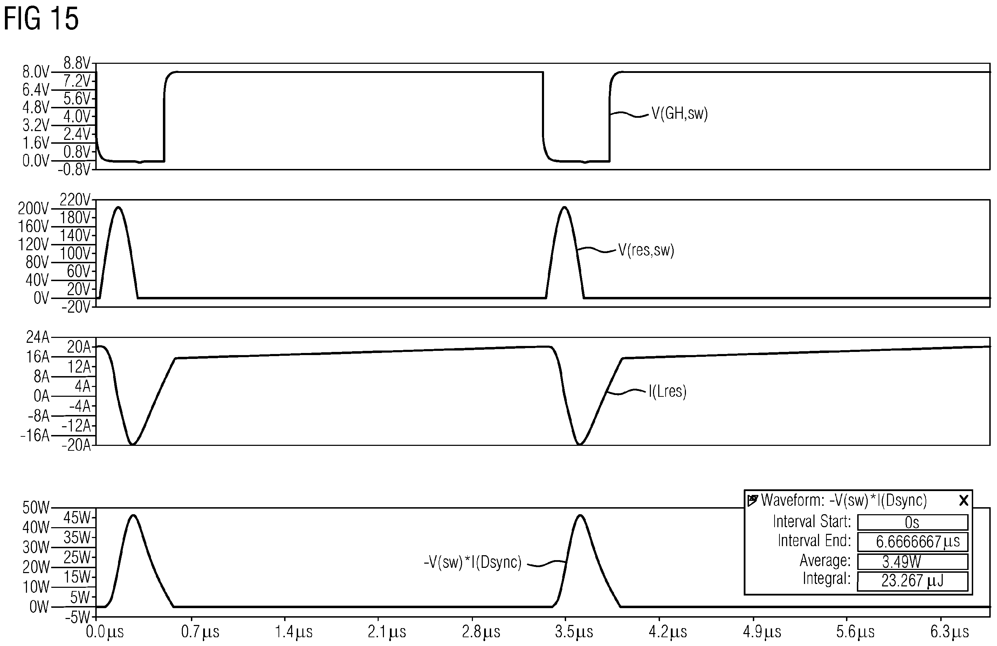

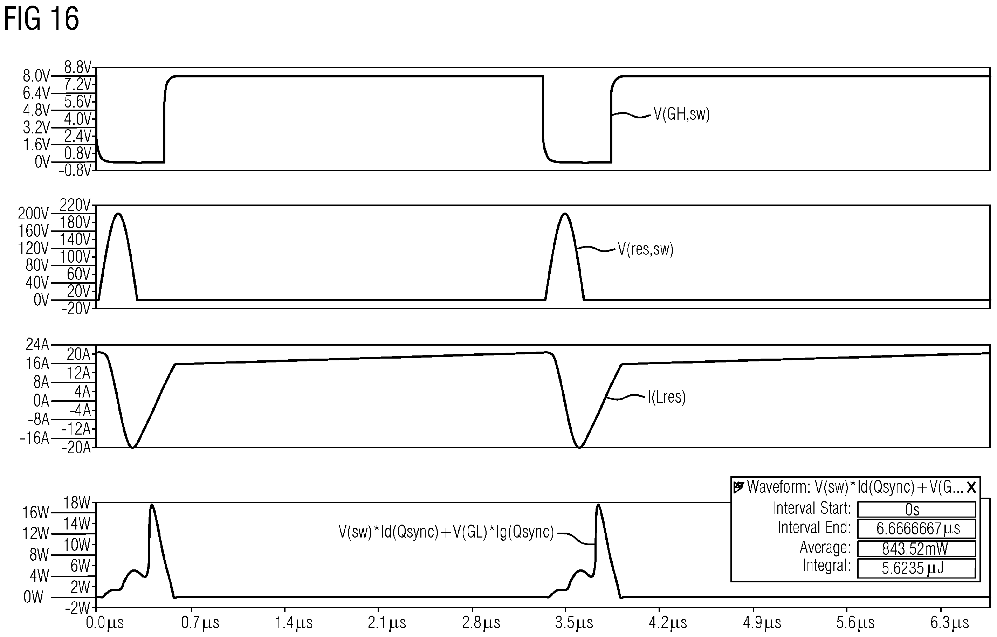

Wie man den in den Figuren 15 und 16 dargestellten Signalverläufen von Simulationen entnehmen kann, hat die vorgeschlagene Synchrongleichrichter-Lösung nur 0.84W Verluste im FET Qsync, während die klassische Diodenlösung bei exakt gleichen Bedingungen auf 3.49W kommt.

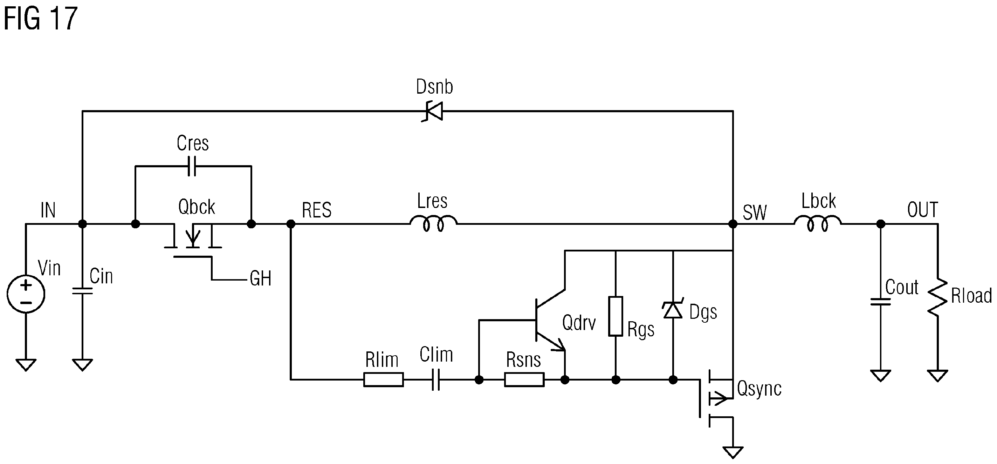

Der in der Fig. 17 dargestellte ZVS-Buck-Wandler in einer zweiten Variante geht aus dem in der Fig. 5 dargestellten Buck-Wandler hervor, weist aber - wie schon die oben beschriebenen Varianten - folgende zusätzliche Komponenten auf: Dlim, Rlim, Clim, Rsns, Qdrv, Rgs, Dgs und Qsync auf.

Qsync ist ein P-MOSFET, der als synchroner Gleichrichter verwendet wird. Sein Sourceanschluss liegt am ersten Verbindungsanschluss SW, somit braucht er zur Ansteuerung eine Gate-Spannung, die niedriger ist als seine Threshold-Spannung. Diese wird von der Resonanzspannung V(res) am zweiten Verbindungsanschluss RES abgeleitet. Der Widerstand Rlim, zusammen mit der Impedanz des Kondensators Clim und den Widerständen Rsns und Rgs bestimmt das Spannungsteilungsverhältnis von V(res) zu V(gh) und somit die Gate-Source-Spannungsamplitude für den Synchrongleichrichtertransistor Qsync. Der Kondensator Clim wird so gewählt, dass die gesamte Gatesteuer-Schaltung bei der bekannten Resonanzfrequenz möglichst verlustarm arbeitet, unter Berücksichtigung der Gate-Ladung des verwendeten FETs, der Resonanzfrequenz, der gewünschten Gatespannung-Amplitude etc. Der Transistor Qdrv, zusammen mit dem Widerstand Rsns, ermöglicht das schnelle Sperren des Synchrongleichrichtertransistors Qsync, falls dies gewünscht ist. Die Zenerdiode Dgs schützt die Gate-Source-Strecke des Synchrongleichrichtertransistors Qsync.

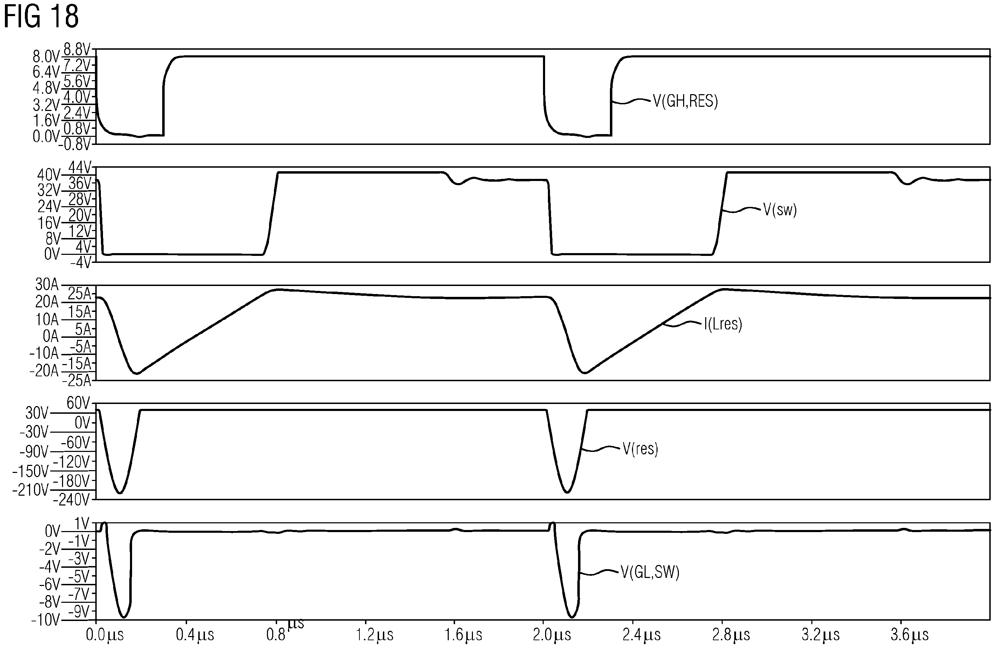

Eine Simulation des vorgeschlagenen ZVS-Buck-Wandlers (Variante 2) mit hoher Ausgangsleistung im Resonanzbetrieb zeigt die charakteristischen Strom-/Spannungsverläufe in der Fig. 18. Die Gate-Source-Spannung des Synchrongleichrichtertransistors Qsync wird im unteren Diagramm dargestellt. Wie man sieht, ist die Amplitude, das Timing und die Form des Steuersignals durch die passende Auswahl der vorgeschlagenen Treiberkomponenten gut geeignet zum Ansteuern sowohl eines Logik-Pegels als auch eines Standard-P-MOSFETs in der Rolle des Synchrongleichrichtertransistors Qsync. Diese unterscheidet sich ~ von klassischen, rechteckigen FET-Steuersignal, da sie aus einer sinusförmigen Resonanzspannung mit wenigen Komponenten kostensparend abgeleitet wird. Es ist naheliegend, dass des Synchron-FET zeitweise im linearen Betrieb mit höherer Verlustleistung arbeiten wird. Trotzdem hat die Lösung mit Synchron-FET bei geeigneter Auslegung wesentlich niedrigere Verluste als die mit einer Diode, wie auch eine Vergleichssimulation darlegen wird.

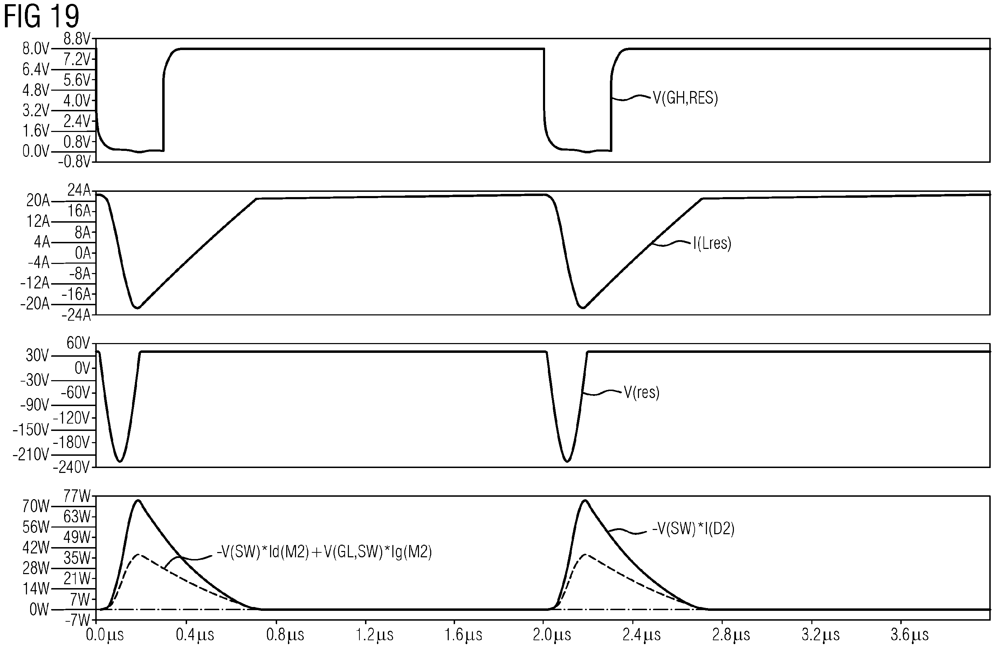

In der Fig. 19 ist eine Vergleichs-Simlation dargestellt. In einem Fall wird eine geeignete Schottky-Diode Dsync als Gleichrichter verwendet (Verlustleistung in Dsync unten in schwarz), im anderen Fall wird ein geeigneter P-FET mit der vorgeschlagenen Treiberschaltung als synchroner Gleichrichter verwendet (Verlustleistung in Qsync). Es ist sofort ersichtlich, dass die Verluste im FET, angesteuert mithilfe der vorgeschlagenen Schaltung, wesentlich niedriger sind als jene der Gleichrichterdiode (Fläche unter der Verlustleistungskurve, gemittelt über eine Schaltperiode ):
Die vorgeschlagenen Lösungen für Synchrongleichrichtung in Resonanzwandlern nutzen die Tatsache aus, dass in einem Resonanzwandler der betrachteten Typen mit dem sogenannten "M-Type-Schalter" die Resonanzspannung die höchste bzw. die niedrigste (je nach Wandlertyp) im System ist.

Somit ergeben sich folgende Vorteile:
- Geeignet für ZVS-Boost und ZVS-Buck-Wandler
- Dieselbe Idee - den synchronen Gleichrichter durch ein Signal, abgeleitet von der Resonanzspannung anzusteuern - lässt sich auf alle galvanisch nicht-getrennten ZVS-Wandler ausdehnen. Dazu zählen z.B. ZVS Buck-Boost, Cuk, SEPIC, Zeta etc -Wandler
- Selbst ZVS-Wandler mit Trafo, wie z.B. ZVS-Flyback, lassen sich unter Umständen damit realisieren, solange sie nicht galvanisch getrennt betrieben werden müssen
- Herkömmliche Highside-Gate-Treiber-ICs können oft gar nicht richtig mit ZVS-Topologien funktionieren, da sie praktisch immer eine Bootstrap-Schaltung verwenden, die auf dem Schaltknoten sitzt, um Spannung für die Highside-FET-Ansteuerung aufzubauen. Wenn die Resonanzdrossel zwischen Schaltknoten und Source verschaltet ist, wie die ZVS-Topologie verlangt, kann die Bootstrap-Schaltung oft nicht richtig funktionieren bzw. werden die max. zulässigen Spannungswerte des ICs überstiegen
- Sehr Kosteneffizient (wenige Komponenten, keine dezidierten Gatetreiber-ICs)
- Zuverlässig (die Resonanzspannung ist immer vorhanden)
- Keine Synchronisierung, keine Totzeiten notwendig (Die Resonanzspannung ist automatisch immer in der richtigen Phase relativ zur Steuerspannung für den Hauptschalter)
- Geringe EMV-Störungen (der Synchrongleichrichter-FET wird mit sinusförmiger und nicht mir rechteckiger Gatespannung angesteuert und schaltet "soft" durch)

## Patentansprüche

1. DC-DC-Wandler mit einem Eingangsanschluss (IN) und einem Ausgangsanschluss (OUT),
wobei zwischen dem Eingangsanschluss (IN) und dem Ausgangsanschluss (OUT) eine Speicherspule (Lbst) und ein dazu über einen ersten Verbindungsanschluss (SW) in Serie geschalteter Synchrongleichrichtertransistor (Qsync) verschaltet sind, wobei zwischen dem ersten Verbindungsanschluss (SW) und einem Bezugspotential eine Resonanzspule (Lres) und ein dazu über einen zweiten Verbindungsanschluss (RES) in Serie geschalteter Speichertransistor (Qbst) verschaltet sind, wobei dem Speichertransistor (Qbst) ein Resonanzkondensator (Cres) parallelgeschaltet ist,
und wobei zwischen dem ersten Verbindungsanschluss (SW) und dem Bezugspotential eine in Sperrrichtung gepolte erste Diode (Dsnb) verschaltet ist, **dadurch gekennzeichnet,**
**dass** zwischen dem zweiten Verbindungsanschluss (RES) und einem Steueranschluss des Synchrongleichrichtertransistors (Qsync) die Serienschaltung aus einem ersten Spannungsteilerwiderstand (Rlim, Rsns) und einem ersten Kondensator (Clim) verschaltet ist und zwischen dem Steueranschluss des Synchrongleichrichtertransistors (Qsync) und dem ersten Verbindungsanschluss (SW) ein zweiter Spannungsteilerwiderstand (Rgs) verschaltet ist.

2. DC-DC-Wandler mit einem Eingangsanschluss (IN) und einem Ausgangsanschluss (OUT),
wobei zwischen dem Eingangsanschluss (IN) und einem ersten Verbindungsanschluss (SW) eine Resonanzspule (Lres) und ein dazu über einen zweiten Verbindungsanschluss (RES) in Serie geschalteter Speichertransistor (Qbck) verschaltet sind, wobei dem Speichertransistor (Qbck) ein Resonanzkondensator (Cres) parallelgeschaltet ist,
wobei zwischen dem ersten Verbindungsanschluss (SW) und dem Ausgangsanschluss (OUT) eine Speicherspule (Lbck) verschaltet ist,
wobei zwischen dem ersten Verbindungsanschluss (SW) und einem Bezugspotential ein Synchrongleichrichtertransistor (Qsync) verschaltet ist,
und wobei zwischen dem Eingangsanschluss (IN) und dem ersten Verbindungsanschluss (SW) eine in Sperrrichtung gepolte erste Diode (Dsnb) verschaltet ist,
**dadurch gekennzeichnet,**
**dass** zwischen dem zweiten Verbindungsanschluss (RES) und einem Steueranschluss des Synchrongleichrichtertransistors (Qsync) die Serienschaltung aus der Laststrecke eines ersten pnp-Bipolartransistors (Qth), einem ersten Spannungsteilerwiderstand (Rlim, Rsns) und einem ersten Kondensator (Clim) verschaltet ist und zwischen dem Steueranschluss des Synchrongleichrichtertransistors (Qsync) und dem Bezugspotential ein zweiter Spannungsteilerwiderstand (Rgs) verschaltet ist,
und **dass** parallel zu der Resonanzspule (Lres) die Serienschaltung aus einem dritten Spannungsteilerwiderstand (Rth1) und einem vierten Spannungsteilerwiderstand (Rth2) geschaltet ist, deren Verbindungspunkt mit dem Basisanschluss des ersten pnp-Bipolartransistors (Qth) verbunden ist.

3. DC-DC-Wandler mit einem Eingangsanschluss (IN) und einem Ausgangsanschluss (OUT),
wobei zwischen dem Eingangsanschluss (IN) und einem ersten Verbindungsanschluss (SW) ein Speichertransistor (Qbck) und eine dazu über einen zweiten Verbindungsanschluss (RES) in Serie geschaltete Resonanzspule (Lres) verschaltet sind, wobei dem Speichertransistor (Qbck) ein Resonanzkondensator (Cres) parallelgeschaltet ist,
wobei zwischen dem ersten Verbindungsanschluss (SW) und dem Ausgangsanschluss (OUT) eine Speicherspule (Lbck) verschaltet ist,
wobei zwischen dem ersten Verbindungsanschluss (SW) und einem Bezugspotential ein Synchrongleichrichtertransistor (Qsync) verschaltet ist,
und wobei zwischen dem Eingangsanschluss (IN) und dem ersten Verbindungsanschluss (SW) eine in Sperrrichtung gepolte erste Diode (Dsnb) verschaltet ist,
**dadurch gekennzeichnet,**
**dass** zwischen dem zweiten Verbindungsanschluss (RES) und einem Steueranschluss des Synchrongleichrichtertransistors (Qsync) die Serienschaltung aus einem ersten Spannungsteilerwiderstand (Rlim, Rsns) und einem ersten Kondensator (Clim) verschaltet ist und zwischen dem Steueranschluss des Synchrongleichrichtertransistors (Qsync) und dem ersten Verbindungsanschluss (SW) ein zweiter Spannungsteilerwiderstand (Rgs) verschaltet ist.

4. DC-DC-Wandler nach Anspruch 1 oder 2, **dadurch gekennzeichnet, dass** dem zweiten Spannungsteilerwiderstand (Rgs) eine Zenerdiode (Dgs) parallelgeschaltet ist, wobei deren Kathode mit dem Steueranschluss des Synchrongleichrichtertransistors (Qsync) verbunden ist.

5. DC-DC-Wandler nach Anspruch 3, **dadurch gekennzeichnet, dass** dem zweiten Spannungsteilerwiderstand (Rgs) eine Zenerdiode (Dgs) parallelgeschaltet ist, wobei deren Anode mit dem Steueranschluss des Synchrongleichrichtertransistors (Qsync) verbunden ist.

6. DC-DC-Wandler nach Anspruch 1 oder 4, **dadurch gekennzeichnet, dass** der erste Spannungsteilerwiderstand (Rlim, Rsns) mit einem ersten Widerstand (Rlim) und einem zweiten Widerstand (Rsns) gebildet ist, zwischen denen der erste Kondensator (Clim) angeordnet ist, und dass zwischen dem Steueranschluss des Synchrongleichrichtertransistors (Qsync) und dem ersten Verbindungsanschluss (SW) die Laststrecke eines pnp-Bipolartransistors (Qdrv) verschaltet ist, wobei der zweite Widerstand (Rsns) zwischen dem Emitteranschluss und dem Basisanschluss des pnp-Bipolartransistors (Qdrv) angeordnet ist.

7. DC-DC-Wandler nach Anspruch 2 oder 4, **dadurch gekennzeichnet, dass** der erste Spannungsteilerwiderstand (Rlim, Rsns) mit einem ersten Widerstand (Rlim) und einem zweiten Widerstand (Rsns) gebildet ist, zwischen denen der erste Kondensator (Clim) angeordnet ist, und dass zwischen dem Steueranschluss des Synchrongleichrichtertransistors (Qsync) und dem Bezugspotential die Laststrecke eines pnp-Bipolartransistors (Qdrv) verschaltet ist, wobei der zweite Widerstand (Rsns) zwischen dem Emitteranschluss und dem Basisanschluss des pnp-Bipolartransistors (Qdrv) angeordnet ist.

8. DC-DC-Wandler nach Anspruch 3 oder 5, **dadurch gekennzeichnet, dass** der erste Spannungsteilerwiderstand (Rlim, Rsns) mit einem ersten Widerstand (Rlim) und einem zweiten Widerstand (Rsns) gebildet ist, zwischen denen der erste Kondensator (Clim) angeordnet ist, und dass zwischen dem Steueranschluss des Synchrongleichrichtertransistors (Qsync) und dem ersten Verbindungsanschluss (SW) die Laststrecke eines npn-Bipolartransistors (Qdrv) verschaltet ist, wobei der zweite Widerstand (Rsns) zwischen dem Emitteranschluss und dem Basisanschluss des npn-Bipolartransistors (Qdrv) angeordnet ist.
